# EUROPEAN PATENT APPLICATION

(11) **EP 0 569 213 A1**
(43) Date of publication of application: **10.11.1993**
(21) Application number: 93303453.0
(22) Date of filing: 04.05.1993
(51) Int. Cl.: G01N 35/06, B01L 3/02

(54) **Method and air-piston pipette for dispensing liquids**

(30) Priority: 04.05.1992 FI 922001
(71) Applicant: WALLAC OY, SF-20101 Turku (FI)
(72) Inventor: Tolonen, Pertti, SF-20740 Turku (FI); Holmberg, Johan, SF-20760 Piispanristi (FI)
(74) Representative: Gallafent, Richard John

(57) **Abstract**

The invention relates to a method and an air-piston pipette (10) for increasing accuracy and repeatability in dispensing liquids. According to the invention, the piston (13) performs a control motion affecting the liquid in the tip (30) before and/or after dispensing. It is a backlash eliminating motion (56), which is performed before the first dispensing and which lowers the liquid level, and/or a drop removing motion (57), which is performed after the dispensing and which raises the liquid level and which prevents possible formation of a drop, being disadvantageous to accuracy and repeatability of dispensing, or which aspirates the drop back into the liquid volume of the tip.

## Description

The invention relates to a method for dispensing liquids by an air-piston pipetting apparatus.

Various liquids are handled and dispensed by pipettes. The drawback is that accuracy and repeatability in dispensing is poor due to several reasons.

A factor that effects inaccuracy in dispensing is that pipettes are normally calibrated for one liquid only which is usually distilled water. Since liquid density, viscosity and other properties can vary, a sufficient accuracy and repeatability is not obtained with other liquids. Naturally, accuracy in dispensing can be improved by calibrating the pipette with various liquids. However, sometimes dispensing must be done with such liquids with which the pipette has not been calibrated and, furthermore, properties of the liquids that are dispensed are not always known.

However, calibration does not remove the second problem which exists in pipettes operating on the air-piston principle. The problem is formation of a drop, which causes inaccuracy, outside the tip of the pipette when some liquids are dispensed. In manual pipettes the drop is removed by touching either the liquid surface or the wall of the container with the tip of the pipette. This method works fairly well with manual pipettes but it is not applicable with automatic pipettes.

The publication WO 91/16977 presents one way to solve the drop forming problem. Formation of the drop is prevented by suddenly stopping the motion of the piston. This arrangement is effective in the particular case that the liquid is in direct contact with the piston, but pipettes that are commonly used operate on the air-piston principle. In that case the compressible air column causes inaccuracy resulting in unsatisfactory accuracy and repeatability in dispensing.

The objective of this invention is to obtain a new method for preventing formation of drops. The method according to the invention is characterized in that, for increasing accuracy and repeatability in dispensing, drop formation at the end of the tip of the air-piston pipette is prevented by aspirating the liquid drop possibly forming at the end of the dispensing tip back into the liquid volume of the tip.

This invention also relates to an air-piston pipette for liquid dispensing. The air-piston pipette according to the invention is characterized in that the piston of the air-piston pipette is arranged to perform a motion in the direction opposite to that of the dispensing motion, i.e. a drop removing motion which aspirates the liquid drop possibly forming at the end of the dispensing tip back into the liquid volume of the tip.

In the following, the invention will be described by examples referring to the enclosed drawings in which
- Figure 1: shows a cross-sectional view of an air-piston pipette apparatus according to the invention with the piston in the down position,
- Figure 2: corresponds to figure 1 and shows the pipette apparatus with the piston in the up position,
- Figure 3: corresponds to figure 1 and shows the pipette apparatus when the detachable tip is being removed,
- Figure 4: shows schematically motions of the piston of the pipette in figure 1 at different pipetting stages,
- Figure 5: shows schematically the control system of the pipette.

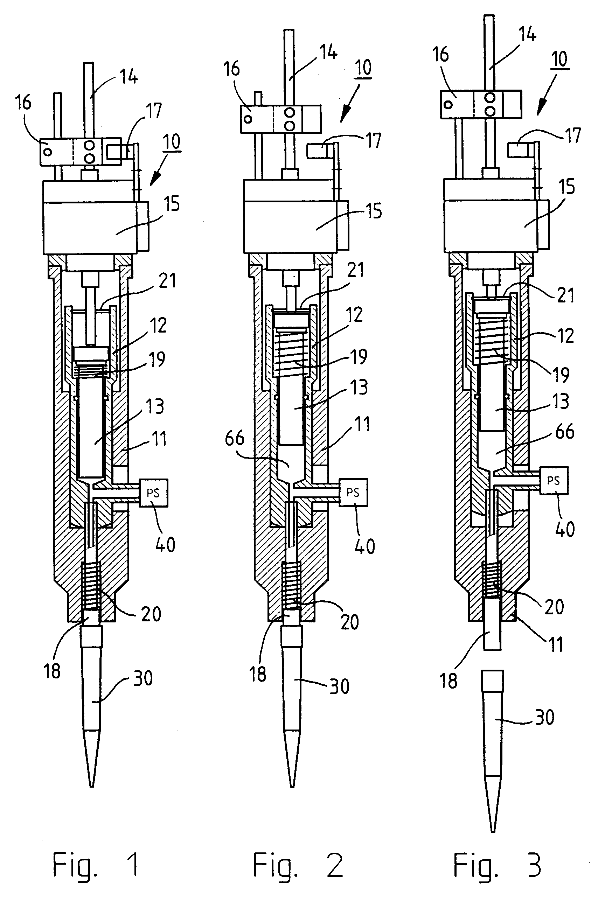

Figure 1 shows a cross-sectional view of the air-piston pipette apparatus 10 according to the invention. The principal parts of the pipette apparatus comprise a body 11, a cylindrical tube 12 inside the body and a piston 13 inside the cylinder. A shaft 14 is connected to the piston 13 and the shaft is moved by a shaft motor 15 in the direction of the axis of the cylinder 12. A rotary lock 16 prevents the shaft from rotating and a sensor fork 17 determines the zero position. A rod is connected to the lower part of the cylindrical tube 12 and the lower portion of the rod forms a conical rod 18 which attaches to the detachable tip 30. Also a pressure sensor 40 is connected to the air volume of the pipette.

Since the body 11, the cylindrical tube 12 and the piston 13 are allowed to move axially relative to each other, springs 19 and 20 are placed between them. Spring 20 placed around the conical rod 18 holds the cylindrical tube 12 and, at the same time, the conical rod 18 in their down position during normal pipetting operations of the pipette 10 and prevents the tip 30 from detaching at a wrong location. Spring 19 between the the piston 13 and the cylindrical tube 12 presses the piston downwards thus removing the effect of mechanical backlash to the accuracy and repeatability of dispensing. In figure 1 the piston 13 of the pipette apparatus 10 is in the down position.

Figure 2 shows the pipette apparatus 10 of figure 1 in a situation where the shaft motor 15 has moved the shaft 14 further upwards so that the piston 13 is in its up position. At the same time, the upper part of the piston 13 has moved against the locking ring 21 at the upper end of the cylindrical tube 12. The cylindrical tube 12 is, however, still in the same position as in figure 1.

Figure 3 shows the pipette apparatus 10 of figure 1 in a situation where the shaft motor 15 has moved the shaft 14 further upwards so that the piston 13 has moved outside its normal motional range. In this case the upper end of the piston 13 presses against the locking ring 21 lifting simultaneously the cylindrical tube 12 upwards. As a result, the conical rod 18, that is connected to the cylinder 12, also moves upwards inside the body 11 whereupon the detachable tip 30 joined to the conical rod 18 hits the body 11 and comes loose.

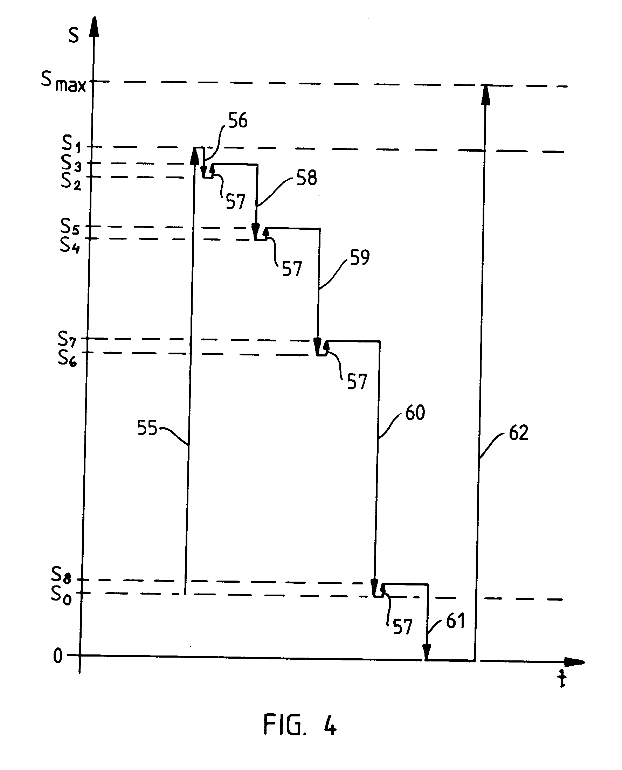

Figure 4 shows schematically motions of the piston 13 of the air-piston pipette 10 in figure 1 at different pipetting stages. The vertical axis in the figure is position s and the horizontal axis is time t. Before starting pipetting, the piston 13, inside the cylinder 12 of the pipette 10, is at a position which corresponds to the base level s₀ in figure 4. Pipetting is started so that the tip 30 of the pipette 10 is immersed in the liquid whereafter the piston 13 performs the filling motion 55 to level s₁ of the maximum fill. The piston is then in the up position and the liquid level in the tip 30 of the pipette is at some position. Immediately after reaching the fill level s₁ the piston 13 performs a small opposite motion 56 downwards to level s₂ and then further an opposite motion 57 upwards to level s₃.

The purpose of these motions 56 and 57 of the piston is to ensure accuracy of the first dispensing stage. It is this stage that is problematic in known pipetting apparatuses. The downward motion 56 can be regarded as the backlash elimination motion. The piston 13 moves downwards i.e. to the same direction as the first dispensing motion and thus eliminates backlash effects. A factor which is perhaps more significant is, however, removal of "liquid backlash" which means that liquid level in the tip of the pipette moves downwards to an area where dry walls cannot affect the accuracy of dispensing at the initial situation.

The upward motion 57 after the backlash elimination motion 56 is a drop removing motion. This motion prevents possible formation of a drop at the end of the tip 30 of the pipette 10, which is disadvantageous to accuracy and repeatability of dispensing. The drop that possibly forms is drawn by this backward motion 57 back into the tip of the pipette.

After these operations the piston 13 of the pipette 10 is at position s₃ whereat the backlash is eliminated, drop formation at the tip of the pipette 10 prevented, and the liquid level in the tip 30 is already in a wetted area. Therefore, the first dispensing motion 58 can be performed with high accuracy whereafter the piston 13 immediately performs a short opposite motion 57 again i.e. the drop removing motion finally ending at point s₅ on the vertical axis.

The second dispensing motion 59 is performed in a similar way as the first one. At the end of the motion 59, an immediate opposite motion 57 takes place from position s₆ to s₇. The third dispensing motion 60 is also similar. After the opposite motion 57, the piston 13 is near to the base level s₀ at point s₈. The detachable tip 30 of the pipette 10 is then nearly empty.

During the motion 61 for emptying of the tip 30 of the pipette 10, the piston 13 is moved right to the lowest position 0. Figure 4 shows the subsequent motion 62 of the piston 13 past the limit s₁ of maximum filling to the up position sₘₐₓ. This motion is utilized in removing the detachable tip 30 of the pipette 10 from the pipette body.

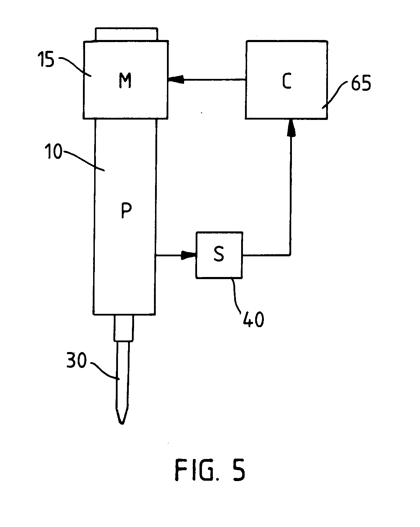

Figure 5 shows schematically the control system of the pipeete 10. In the pipetting apparatus 10, the contol unit 65 controls the motor 15 so that it moves the piston 13 inside the pipette in both directions according to control instructions. The piston adjusts the liquid volume in the tip 30 and, therefore, dispensing. The spring 19 keeps the piston 13 in contact with the shaft of the motor thus removing the effect of mechanical backlash. A stepper motor is preferably used as the electric motor 15 whereby quick and accurate movements of the piston are obtained without any separate brakes or any other transmission means.

The pressure sensor 40 connected to the air volume 66 of the pipette 10 continuously gives the control unit 65 the air pressure inside the pipette. The received pressure value can be utilized in many different ways. It tells, for example, the degree of fullness of the tip 30 of the pipette 10 and informs the control unit 65 about various possible malfunctions of the pipette 10. The pipetting apparatus 10 can be controlled so that the pressure sensor 40 gives the alarm on disturbances but the pressure sensor 40 can also be arranged to control the whole process in real time.

It is obvious to those skilled in the field that different embodiments of the invention can vary within the limits of the enclosed claims.

## Claims

1. Method for dispensing liquids by an air-piston pipette apparatus (10), where for increasing accuracy and repeatability of dispensing, at least one control action is performed by the piston (13), before and/or after dispensing, affecting on the liquid in the tip (30) of the pipette (10), **characterized** in that, after the downward motion, e.g. dispensing motion (57, 59, 60) of the piston (13), a drop removing motion (57) is performed by the piston, which motion raises the liquid level in the tip (30) of the pipette (10) and which prevents possible formation of a drop, being disadvantageous to accuracy and repeatability of dispensing, at the end of the dispensing tip (30) of the air-piston pipette (10) or which aspirates the drop back into the liquid volume of the tip.

2. Method according to claim 1, **characterized** in that, the drop removing motion (57), which raises the liquid level in the tip (30) of the pipette (10), is performed by the piston (13) immediately after each dispensing motion (57, 59, 60).

3. Method according to claim 1, **characterized** in that, the drop removing motion (57), which raises the liquid level in the tip (30) of the pipette (10), is performed by the piston (13) also immediately after the backlash eliminating motion (56), which lowers the liquid level in the tip (30) of the pipette (10) before the first dispensing dispensing motion (57, 59, 60).

4. Air-piston pipetting apparatus (10) for dispensing liquids, which air-piston pipetting apparatus (10) is provided with a control unit (65) which, for increasing accuracy and repeatability of dispensing, produces a control motion of the piston (13) which changes the liquid level in the tip (30) of the pipette (10) before and/or after dispensing, **characterized** in that the control unit (65) of the air-piston pipetting apparatus (10) is provided to control the piston (13) after the downward motion, e.g. dispensing motion (57, 59, 60), upwards so that the control motion of the piston is the drop removing motion (57), which raises the liquid level in the tip (30) of the pipette (10) and which aspirates the drop, being disadvantageous to accuracy and repeatability of dispensing, possibly forming at the end of the tip (30) back into the liquid volume of the tip.

5. Air-piston pipetting apparatus (10) according to claim 4, **characterized** in that the piston (30) is connected to an electric motor (15), preferably a stepper motor, which moves the piston in both directions, and a spring (19) which presses the piston upwards for eliminating the effect of mechanical backlash.

6. Air-piston pipetting apparatus (10) according to claim 4 or 5, **characterized** in that, before the first dispensing, the control unit (65) directs the piston (13) downwards so that the motion of the piston is the backlash eliminating motion (56) which lowers the liquid level in the tip (30) of the pipette (10).

7. Air-piston pipetting apparatus (10) according to claim 4, 5 or 6, **characterized** in that, the control unit (65) is arranged to control the piston (13) so that the upward drop removing motion (57) takes place immediately after the downward dispensing motion (57, 59, 60) of the piston or after the backlash eliminating motion (56).
